# EUROPEAN PATENT APPLICATION

(11) **EP 4 847 883 A1**
(43) Date of publication of application: **02.12.2026**
(21) Application number: 24937380.4
(22) Date of filing: 29.04.2024
(51) Int. Cl.: G01C 21/34

(54) **LANE-LEVEL NAVIGATION METHOD AND APPARATUS, COMPUTER DEVICE, STORAGE MEDIUM, PROGRAM PRODUCT, AND MOVABLE PLATFORM**

(71) Applicant: SZ Zhuoyu Technology Co., Ltd., Shenzhen, Guangdong 518055 (CN)
(72) Inventor: WANG, Yize, Shenzhen, Guangdong 518055 (CN); QI, Chi, Shenzhen, Guangdong 518055 (CN); LIU, Sikang, Shenzhen, Guangdong 518055 (CN)
(74) Representative: Botti & Ferrari S.p.A.
(86) International application number: PCT/CN2024/090668
(87) International publication number: WO 2025/227330

(57) **Abstract**

The present application discloses a lane-level navigation method, including: determining a road-level navigation route from a current position of a vehicle to a destination according to road-level information of a Standard Definition (SD) Map, the road-level navigation route including a plurality of road segments; determining a Lane-to-Lane(L2L) topological map of the plurality of road segments based on lane-level information of the SD Map; and performing navigation based at least on the topological map. By dividing the road-level navigation route into a plurality of road segments, and establishing a Lane-to-Lane topological relationship of adjacent road segments according to a preset alignment manner based on lane-level information of the SD Map, the present application ultimately generates the Lane-to-Lane topological map along the entire road-level navigation route, so as to enable lane-level navigation without relying on a High Definition (HD) map or an Enhanced SD map.

## Description

### TECHNICAL FIELD

The present application relates to the field of autonomous driving, and in particular to a lane-level navigation method, apparatus, computer device, storage medium, computer program product, and mobile platform.

### BACKGROUND

With the advancement of autonomous driving technology, Urban NOA (Navigate on Autopilot) has been introduced in related technologies. Currently, all solutions available on the market are implemented based on High Definition (HD) maps or Enhanced Standard Definition (SD) maps. However, HD maps and Enhanced SD maps suffer from high costs, limited coverage and low update frequency, resulting in high costs and poor stability for Urban NOA.

### SUMMARY

The embodiments of the present application provide a lane-level navigation method, apparatus, computer device, storage medium, computer program product, and mobile platform to address at least one of the above technical problems.

In a first aspect, embodiments of the present application provide a lane-level navigation method, including:
determining a road-level navigation route from a current position of a vehicle to a destination according to road-level information of a Standard Definition (SD) map, wherein the road-level navigation route includes a plurality of road segments;
determining a Lane-to-Lane topological map of the plurality of road segments based on lane-level information of the SD Map; and
performing navigation based at least on the topological map.

In some embodiments, the plurality of road segments includes adjacent first and second road segments, and determining the Lane-to-Lane topological map of the plurality of road segments based on the lane-level information of the SD Map includes connecting lanes of the first road segment and the second road segment according to a preset alignment manner to form a Lane-to-Lane topological relationship of the first road segment and the second road segment.

In some embodiments, connecting the lanes of the first road segment and the second road segment according to the preset alignment manner to form the Lane-to-Lane topological relationship of the first road segment and the second road segment includes: connecting the lanes of the first road segment and the second road segment according to a left-side lane alignment manner and/or a right-side lane alignment manner to form the Lane-to-Lane topological relationship of the first road segment and the second road segment.

In some embodiments, the lane-level navigation method further includes connecting the lanes of the first road segment and the second road segment according to one-to-one manner to form the Lane-to-Lane topological relationship of the first road segment and the second road segment, when the first road segment and the second road segment have the same number of lanes.

In some embodiments, the lane-level navigation method further includes determining a local Lane-to-Lane topological relationship within a perception range of the vehicle based on vehicle perception information; and performing navigation based at least on the topological map includes performing navigation based on the local Lane-to-Lane topological relationship and the topological map.

In some embodiments, performing navigation based on the local Lane-to-Lane topological relationship and the topological map includes: updating the topological map based on the local Lane-to-Lane topological relationship; and performing navigation based on the updated topological map.

In some embodiments, performing navigation based on the updated topological map includes: determining whether a lane-change timing is met based on road traffic information; and when the lane-change timing is met, controlling the vehicle to perform a lane change based on the updated topological map.

In a second aspect, embodiments of the present application provide a lane-level navigation apparatus, including:
a navigation route determination module configured for determining a road-level navigation route from a current position of a vehicle to a destination according to road-level information of a Standard Definition (SD) map, wherein the road-level navigation route includes a plurality of road segments;
a topological map determination module configured to determine a Lane-to-Lane topological map of the plurality of road segments based on the lane-level information of the SD Map; and
a navigation module configured to perform navigation based at least on the topological map.

In a third aspect, embodiments of the present application provide a computer device including a memory, a processor, and a computer program stored in the memory, wherein the processor executes the computer program to implement the steps of any one of the lane-level navigation methods described above in the present application.

In a fourth aspect, embodiments of the present application provide a computer-readable storage medium having computer programs or instructions stored thereon, which, when executed by a processor, implement the steps of any one of the above lane-level navigation methods of the present application.

In a fifth aspect, embodiments of the present application provide a computer program product including computer programs or instructions that, when executed by a processor, implement the steps of any one of the above lane-level navigation methods of the present application.

In a sixth aspect, embodiments of the present application provide a mobile platform on which a computer device according to the present application is installed.

According to the present application, firstly, a road-level navigation route is determined from a current position of a vehicle to a destination according to the road-level information of an SD Map; then, based on the lane-level information of the SD Map, a Lane-to-Lane topological map of the plurality of road segments along the road-level navigation route is determined; and finally, lane-level navigation is performed based on the topological map. The above process for implementing lane-level navigation does not rely on a High Definition (HD) map or an Enhanced SD Map, thereby reducing the cost for lane-level navigation and improving its stability.

### BRIEF DESCRIPTION OF THE DRAWINGS

To more clearly illustrate the technical solutions of the embodiments of the present application, the accompanying drawings used in the description of the embodiments will be briefly introduced below. Obviously, the drawings described herein illustrate some embodiments of the present application. A person skilled in the art may also derive other drawings from these drawings without creative efforts.
FIG. 1 is a schematic flowchart illustrating an embodiment of the lane-level navigation method of the present application;
FIG. 2a and FIG. 2b are schematic diagrams illustrating Lane-to-Lane topology according to one-to-one connection manner of the present application;
FIG. 3a and FIG. 3b are schematic diagrams illustrating Lane-to-Lane topology according to left-lane alignment manner of the present application;
FIG. 4a and FIG. 4b are schematic diagrams illustrating Lane-to-Lane topology according to right-side lane alignment manner of the present application;
FIG. 5a and FIG. 5b are schematic diagrams illustrating Lane-to-Lane topology of the present application according to the left-side lane alignment manner and the right-side lane alignment manner;
FIG. 6 is a flowchart illustrating another embodiment of the lane-level navigation method of the present application;
FIG. 7a is a schematic diagram of a right-side growing road of the present application;
FIG. 7b is a schematic diagram of a left-side growing road of the present application;
FIG. 8 is a schematic block diagram of an embodiment of the lane-level navigation apparatus of the present application; and
FIG. 9 is a schematic structural diagram of an embodiment of a computer device of the present application.

### DETAILED DESCRIPTION

To make the objectives, technical solutions, and advantages of the embodiments of the present application clearer, the technical solutions of the embodiments of the present application will be described below in a clear and complete manner with reference to the accompanying drawings. Obviously, the described embodiments are part of, but not all of, the embodiments of the present application. Based on the embodiments of the present application, all other embodiments obtained by a person skilled in the art without creative efforts shall fall within the scope of protection of the present application. It should be noted that, where there is no conflict, the embodiments of the present application and the features therein may be combined with one another.

It should also be noted that, as used herein, the terms "comprise" and "include" and their variants not only include those elements, but also include other elements not explicitly listed, or also include elements inherent to such process, method, article, or device. Unless further limited, elements defined by the phrase "comprising ..." do not exclude the presence of additional identical elements in the process, method, article, or device that includes said element.

The present application discloses a lane-level navigation method applied to autonomous vehicles to achieve autonomous driving functions. Autonomous driving functions include, but are not limited to, Urban NOA.

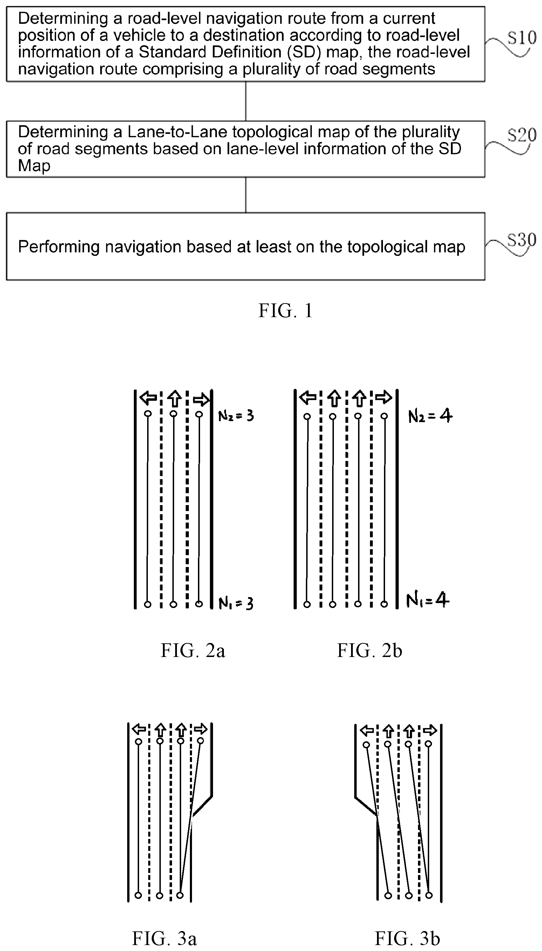

FIG. 1 shows a flowchart of an embodiment of the lane-level navigation method of the present application. This embodiment includes the following steps:
S10: determining a road-level navigation route from a current position of a vehicle to a destination based on the road-level information of a Standard Definition (SD) map. The road-level navigation route includes a plurality of road segments.

For example, after a user sets the destination on a human-machine interface screen, a navigation system calculates N routes (where N is greater than or equal to 1) from the current position to the destination based on the road-level information of the SD Map (including but not limited to: road topology, road class, road speed limit, road length, and traffic congestion level), and recommends the routes on the human-machine interface screen for user selection. The method for calculating N routes from the current position to the destination may employ any existing method in conventional road-level navigation technologies, which is not limited in the present application.

In response to a selection operation input by the user on the human-machine interaction screen, the road-level navigation route that includes a plurality of road segments is determined from N routes. By way of example, the road-level navigation route is divided into a plurality of road segments, each of which includes a plurality of lanes.

S20: determining a Lane-to-Lane (L2L) topological map of the plurality of road segments based on the lane-level information of the SD Map.

For example, the lane-level information of the SD Map includes, but is not limited to, the number of lanes, the left-right adjacency relationships between lanes, and lane turning information, etc. The SD Map accordingly includes lane-level information for each road segment (e.g., the number of lanes on each road segment, left-right adjacency relationships between lanes, lane turning information, etc.). Alternatively, the lane-level information for each road segment (e.g., the number of lanes on each road segment, left-right adjacency relationships between lanes, lane turning information, etc.) may be determined based on the lane-level information of the SD Map.

Determining the L2L topological map of the plurality of road segments based on lane-level information of the SD Map includes: determining the L2L topological map of the plurality of road segments based on the lane-level information of each road segment. For example, the L2L topological map includes, but is not limited to, lane-level topology: left-right adjacency relationships, predecessor-successor relationships, fork and merge relationships, and lane connection relationships before and after intersections. The Lane-level topology is an essential element of an HD map. Autonomous vehicles rely on lane-level topology to perform maneuvers such as lane changing, merging/diverging, traversing intersections, and entering/exiting ramps. For example, the L2L topology between the adjacent first and second road segments are determined based on the lane-level information of the first and second road segments. The L2L topology includes, but is not limited to, left-right adjacency relationships between lanes and predecessor-successor relationships between lanes. Determining the L2L topology of the adjacent first and second road segments based on their lane-level information includes: determining the left-right adjacency relationships between lanes of the first road segment based on the lane-level information of the first road segment; determining the left-right adjacency relationships between lanes of the second road segment based on the lane-level information of the second road segment; and determining the predecessor-successor relationships between lanes of the first and second road segments based on the left-right adjacency relationships between lanes of the first road segment and the left-right adjacency relationships between lanes of the second road segment, according to a preset alignment manner(including left-lane alignment manner and/or right-lane alignment manner).

S30: performing navigation based at least on the topological map.

For example, a lane-level navigation for the vehicle is implemented based on the generated L2L topological map. Once the L2L topological map is obtained, a lane-level navigation route from the vehicle's current position to the destination can be determined, thereby enabling lane-level navigation. For example, a plurality of road segments included in the route from the vehicle's current position to the destination are determined, and the lane-level navigation route from the vehicle's current position to the destination is determined based on the topological map between the plurality of road segments. For example, if it is determined that the route from the vehicle's current position to the destination includes one left turn and one right turn, a lane-level path is planned for traveling into the left-turn lane (e.g., the leftmost lane) prior to the left turn according to the topological map between the plurality of road segments (including the left-right adjacency relationships and predecessor-successor relationships between lanes). Further, the lane-level path is planned for traveling into the right-turn lane (e.g., the rightmost lane) prior to the right turn. The lane-level navigation route from the vehicle's current position to the destination is generated based on the lane-level paths for each segment determined as described above.

In this embodiment, first, a road-level navigation route (that includes plurality of road segments) from the vehicle's current position to the destination is determined according to the road-level information of the SD Map; then the L2L topological map of the plurality of road segments of the road-level navigation route is determined based on the lane-level information of the SD Map; and finally, the lane-level navigation is performed based on the generated topological map. The above-described lane-level navigation process does not depend on HD maps or Enhanced SD maps, thus reducing the cost for lane-level navigation and improving its stability.

In some embodiments, the plurality of road segments includes a first road segment and a second road segment that are adjacent to each other. Determining the L2L topological map of the plurality of road segments based on lane-level information of SD Map includes: connecting lanes of the first and second road segments according to a preset alignment manner to form a L2L topological relationship of the first and second road segments.

For example, the number of lanes in the first and the second road segments may be the same or different. When the first road segment and the second road segment have the same number of lanes, one-to-one corresponding connections between the lanes of the first and second road segments are established according to a preset alignment manner (e.g., the preset alignment manner includes a left-side lane alignment manner and/or a right-side lane alignment manner). When the first road segment and the second road segment differ in the number of lanes, both one-to-one corresponding connections and one-to-many corresponding connections are established between the lanes of the first and second road segments according to a preset alignment manner (e.g., when the first road segment has 3 lanes, and the second road segment has 4 lanes, Lanes 1-3 of the first road segment are connected to Lanes 1-3 of the second road segment in a one-to-one correspondence according to a preset alignment manner, while Lane 3 of the first road segment is also connected to Lane 4 of the second road segment. Thus, one-to-one corresponding connections are established between Lanes 1-2 of the first road segment and Lanes 1-2 of the second road segment, respectively, and one-to-many corresponding connections are established between Lane 3 of the first road segment and Lanes 3-4 of the second road segment).

The present application divides a road-level navigation route into a plurality of road segments and establishes a L2L topological relationship of adjacent road segments according to a preset alignment manner based on lane-level information of the SD map, thereby ultimately determining the L2L topological map along the entire road-level navigation route. Accordingly, lane-level navigation can be achieved without the need for HD maps or Enhanced SD maps.

In some embodiments, the lane-level navigation method of the present application further includes: when the first road segment and the second road segment have the same number of lanes, connecting the lanes of the first road segment and the second road segment according to one-to-one manner to form the L2L topological relationship of the first road segment and the second road segment.

FIG. 2a and FIG. 2b are schematic diagrams illustrating L2L topological connection according to one-to-one connection manner. In the figures, circles represent lanes, and the lines connecting the circles represent topological relationships between the lanes of the two road segments. FIG. 2a shows an example where the first road segment includes three (3) lanes (corresponding to 3 circles, N₁= 3) and the second road segment includes 3 lanes (corresponding to 3 circles, N₂= 3). FIG. 2b shows an example where the first road segment includes four (4) lanes (corresponding to 4 circles, N₁= 4) and the second road segment includes 4 lanes (corresponding to 4 circles, N₂= 4).

In some embodiments, connecting the lanes of the first road segment and the second road segment according to a preset alignment manner to form a L2L topological relationship of the first and second road segments includes: connecting the lanes of the first road segment and the second road segment according to a left-side lane alignment manner and/or a right-side lane alignment manner to form a L2L topological relationship of the first and second road segments.

For example, the preset alignment manner includes a left-side lane alignment manner and/or a right-side lane alignment manner. In some embodiments, a left-side lane alignment manner is used to connect the lanes of the first road segment and the second road segment to form a L2L topological relationship of the first and second road segments.

FIG.3a and FIG.3b are schematic diagrams illustrating L2L topological connection according to the left-side lane alignment manner. In the figures, circles represent lanes, and the lines connecting the circles represent the topological relationships between the lanes of the two road segments. For example, assume that the first road segment includes three (3) lanes (corresponding to 3 circles) and the second road segment includes four (4) lanes (corresponding to 4 circles). FIG. 3a shows a right-side growth-type road (i.e., increasing from three lanes to four lanes, with a new lane added on the right side of the road segment), and FIG. 3b shows a left-side growth-type road (i.e., increasing from three lanes to four lanes, with a new lane added on the left side of the road segment).

Left-side lane alignment manner refers to a configuration in which, starting from the leftmost lanes of each of the first and second road segments, the first left lane of the first road segment connects to the first left lane of the second road segment, the second left lane of the first road segment connects to the second left lane of the second road segment, the third left lane of the first road segment connects to the third left lane of the second road segment, and the third left lane of the first road segment connects to the fourth left lane of the second road segment.

By means of the above embodiment, the L2L topological relationship between adjacent road segments is established, thereby making it possible to construct an entire lane topological map for realizing lane-level navigation.

However, in the course of developing the present application, the inventors have found that, based on road-level lane information, it is only known that the first road segment includes three (3) lanes and the second road segment includes four (4) lanes, but it cannot be determined whether the transition from the first road segment to the second road segment is a left-side growth-type road or a right-side growth-type road. If the road is a right-side growth-type road, then the L2L topological relationship as shown in FIG. 3a, which is constructed according to the left-lane alignment manner, is correct. If the road is a left-side growth-type road, then the L2L topological relationship as shown in FIG. 3b, which is constructed according to the left-lane alignment manner, is incorrect (only an incorrect topological relationship is established). This will lead to an incorrect L2L topological relationship of the first and second road segments, ultimately affecting the accuracy and stability of lane-level navigation.

In some embodiments, the right-side lane alignment manner is used to connect the lanes of the first road segment and the second road segment to establish the L2L topological relationship of the first and second road segments.

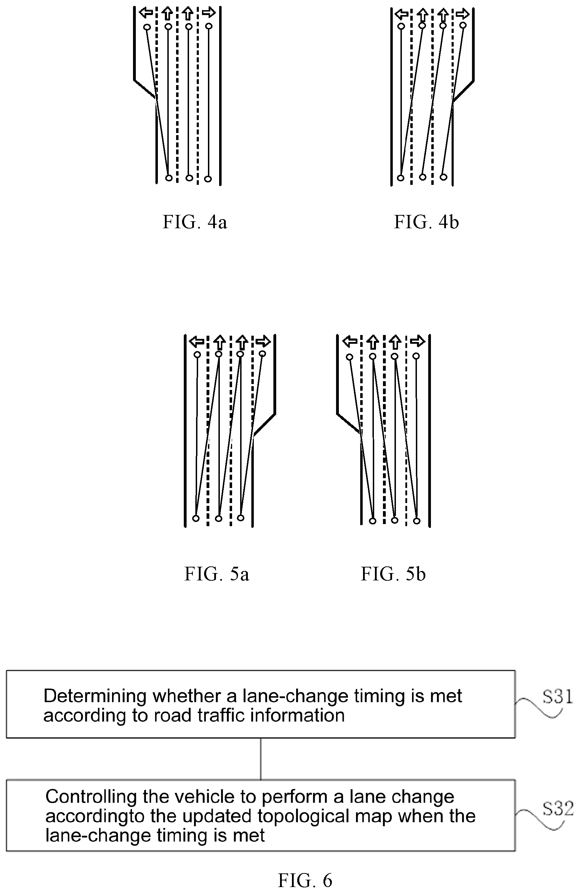

FIG. 4a and FIG. 4b are schematic diagrams illustrating L2L topological connection according to the right-side lane alignment manner. In the figures, circles represent lanes, and the lines connecting the circles represent a L2L topological relationship of the two road segments. For example, assume that the first road segment includes 3 lanes (corresponding to 3 circles) and the second road segment includes 4 lanes (corresponding to 4 circles). FIG. 4a shows a left-side growth-type road (i.e., increasing from three lanes to four lanes, with a new lane added on the left side of the road segment), and FIG. 4b shows a right--side growth-type (i.e., increasing from three lanes to four lanes, with a new lane added on the right side of the road segment).

Right-side lane alignment manner refers to a configuration in which, starting from the rightmost lanes of each of the first and second road segments, the first right lane of the first road segment connects to the first right lane of the second road segment, the second right lane of the first road segment connects to the second right lane of the second road segment, the third right lane of the first road segment connects to the third right lane of the second road segment, and the third right lane of the first road segment connects to the fourth right lane of the second road segment.

By means of the above embodiment, the L2L topological relationship between adjacent road segments is established, thereby making it possible to construct an entire lane topological map for realizing lane-level navigation.

However, in the course of developing the present application, the inventors have found that, based on road-level lane information, it is only known that the first road segment includes three lanes and the second road segment includes four lanes, but it cannot be determined whether the transition from the first road segment to the second road segment is a left-side growth-type road or a right-side growth-type road. If the road is a left-side growth-type road, then the L2L topological relationship as shown in FIG. 4a, which is constructed according to the right-side lane alignment manner, is correct. If the road is a right--side growth-type road, then the L2L topological relationship as shown in FIG. 4b, which is constructed according to the right-lane alignment manner, is incorrect (only an incorrect topological relationship is constructed). This will lead to an incorrect topological relationship between the lanes of the first and second road segments, which ultimately affects the accuracy and stability of lane-level navigation.

Furthermore, to improve the accuracy and stability of lane-level navigation, in response to the incorrect L2L topological relationship of the first and second road segments caused by using only the left-side lane alignment manner or the right-side lane alignment manner in the above embodiments, and where only incorrect topological relationships exist, the present application provides the following embodiment: the lanes of the first road segment and the second road segment are connected using both the left-side lane alignment manner and the right-side lane alignment manner to establish the L2L topological relationship of the first and second road segments.

FIG.5a and FIG. 5b are schematic diagrams illustrating L2L topological connection using both the left-side lane alignment manner and the right-side lane alignment manner simultaneously. In the figures, circles represent lanes, and the lines connecting the circles represent the L2L topological relationship of the two road segments. For example, assume that the first road segment includes 3 lanes (corresponding to 3 circles) and the second road segment includes 4 lanes (corresponding to 4 circles). FIG. 5a shows a right-side growth-type road (i.e., increasing from three lanes to four lanes, with a new lane added on the right side of the road segment), where the topological connection corresponds to the superposition of FIG. 3a and FIG. 4b. FIG. 5b shows a left-side growth-type road (i.e., increasing from three lanes to four lanes, with a new lane added on the left side of the road segment), where the topological connection corresponds to the superposition of FIG. 3b and FIG. 4a.

In this embodiment, since both left-side lane alignment manner and right-side lane alignment manner are simultaneously employed for topological connection between lanes, regardless of whether the road is of the left-side growth-type road or right-side growth-type road, it is ensured that the constructed L2L topological relationship of the first and second road segments contains a correct topological relationship that is consistent with actual road condition, thereby guaranteeing that real topological connections will always have a non-zero connection probability.

In some embodiments, the lane-level navigation method of the present application further includes: determining a local Lane-to-Lane(L2L) topological relationship within a vehicle perception range according to vehicle perception information; and the performing navigation based at least on the topological map, including: performing navigation according to the local L2L topological relationship and the topological map.

For example, vehicle perception information includes, but is not limited to, image information captured by vehicle cameras, and detection information obtained by vehicle radars, and the like. Taking the image information captured by the vehicle cameras as an example, the vehicle can acquire image information within a line-of-sight range collected by the cameras, and perform lane identification based on the image information. According to the identified lanes, the L2L topological relationship of road segments within the line-of-sight range, i.e., the local L2L topological relationship, is determined.

In this embodiment, the local L2L topological relationship within the vehicle's perception range is determined based on perception information of the vehicle, and lane-level navigation is performed in conjunction with the constructed topological map. This approach, which relies on accurate local L2L topological relationship determined from the perception information of the vehicle, compensates for the issue of erroneous lane topological relationship introduced by the simultaneous use of both left-side and right-side lane alignment manners, thereby improving the accuracy and stability of lane-level navigation.

In some embodiments, performing navigation based on the local L2L topological relationship and the topological map includes: updating the topological map based on the local L2L topological relationship; and performing navigation based on the updated topological map.

For example, after the local L2L topological relationship is determined, the corresponding L2L topological relationships in the topological map are updated based on the local L2L topological relationship, and lane-level navigation is performed based on the updated topological map. For example, the topological map includes L2L topological relationships of the plurality of road segments, as well as positional information for each road segment. Here, the positional information corresponding to the local L2L topological relationship can be determined based on the vehicle's current positioning information, thereby further determining the L2L topological relationship of the corresponding road segments (e.g., the L2L topological relationship of the road segment where the vehicle is currently located).

For example, based on the local L2L topological relationship, redundant or erroneous topological relationships in the corresponding L2L topological relationships in the topological map are removed. That is, the L2L topological relationships containing redundant or erroneous topological relationships are collapsed to include only the correct topological relationships.

FIG. 6 shows a schematic flowchart illustrating another embodiment of the lane-level navigation method of the present application. In this embodiment, performing navigation based on the updated topological map includes:
S31: determining whether a lane-change timing is met according to road traffic information. The road traffic information includes at least one of the following: passable distance, traffic congestion level, road class, road speed limit, and road length. The lane-change timing refers to lane change conditions. The vehicle is controlled to perform a lane change when the conditions are met, or otherwise maintain its current lane .

For example, determining whether a lane-change timing is met according to road traffic information includes: determining a first cost for the vehicle to maintain its current lane according to road traffic information, and/or determining a second cost for the vehicle to perform a lane change according to road traffic information; and determining whether a lane-change timing is met based on the first cost and/or the second cost.

For example, when the road class matches a preset class and the passable distance is less than a preset distance (e.g., the road class is an expressway and the preset distance is 2 km; or the road class is an urban expressway and the preset distance is 1 km), it is determined that the lane change conditions are met, and the vehicle is controlled to perform a lane change.

For example, when the road class is a preset class, the passable distance is less than a preset distance, and the road ahead is relatively congested (e.g., the road class is an expressway and the preset distance is 3 km; or the road class is an urban expressway, and the preset distance is 1.5 km), it is determined that the lane change conditions are met, and the vehicle is controlled to perform a lane change. In this embodiment, under the same road class, the preset distance for triggering lane change control is increased based on road congestion conditions, so as to ensure sufficient distance to complete the lane change. It should be noted that the above method for determining lane change control are merely examples, which is not limited herein.

S32: controlling the vehicle to perform a lane change according to the updated topological map when the lane-change timing is met.

For example, determining whether the lane-change timing is met based on the first cost and/or the second cost includes: comparing the first cost and the second cost, and determining that the lane-change timing is met when the first cost is greater than the second cost; or comparing the first cost with a first threshold and/or comparing the second cost with a second threshold, and determining that the lane-change timing is met when the first cost is greater than the first threshold and/or the second cost is less than the second threshold.

In this embodiment, whether to control the vehicle to perform a lane change may be determined solely based on the first cost for the vehicle to maintain its current lane. For example, when the first cost for the vehicle to maintain its current lane is sufficiently high (exceeding a preset threshold), the vehicle is controlled to perform a lane change. For instance, the vehicle needs to turn right at an upcoming intersection from the rightmost lane while it is currently positioned in the second lane from the right, requiring a single rightward lane change at an appropriate position. When the vehicle is far from an intersection, the passable distance is large and the cost for maintaining the current lane is relatively low, and the system will not initiate an urgent lane change. As the vehicle gradually approaches the intersection, the passable distance decreases, and the cost for maintaining the current lane increases (exceeding the preset threshold), at which point the system initiates a rightward lane change.

In this embodiment, whether to control the vehicle to perform a lane change may be determined solely based on the second cost for changing lanes. For example, when the second cost for the vehicle to perform a lane change is sufficiently low (less than a preset threshold), the vehicle is controlled to perform a lane change. Taking the same intersection turning scenario as an example: the vehicle needs to turn right at an upcoming intersection from the rightmost lane while it is currently positioned in the second lane from the right, requiring a single rightward lane change at an appropriate position. When the vehicle is far from the intersection, the passable distance is large, and the cost for changing lanes to the right is relatively high, and the system will not initiate an urgent lane change. As the vehicle gradually approaches the intersection, the passable distance decreases, and the cost for changing lanes to the right becomes lower, at which point the system initiates a rightward lane change.

This embodiment may also determine whether to control the vehicle to perform a lane change based on both the first cost for the vehicle to maintain its current lane and the second cost for the vehicle to perform a lane change. For example, when the first cost for the vehicle to maintain its current lane is sufficiently high (exceeding the second cost for the vehicle to perform a lane change), the vehicle is controlled to perform a lane change. As another example, the vehicle needs to turn right at an upcoming intersection from the rightmost lane while it is currently positioned in the second lane from the right, requiring a single rightward lane change at an appropriate position. When the vehicle is far from the intersection, the passable distance is large, the cost for maintaining the current lane is relatively low, and the system with not initiate an urgent lane change. As the vehicle gradually approaches the intersection, the passable distance decreases, and the cost for maintaining the current lane increases and exceeds the cost for performing a lane change, at which point the system initiates a rightward lane change.

In some embodiments, the updated topological map includes nodes representing lanes and links representing the connections between lanes. Determining the first cost for the vehicle to maintain its current lane and the second cost for the vehicle to perform a lane change based on road traffic information includes: assigning weights to the links in the updated topological map based on road traffic information; and determining the first cost for a vehicle to maintain its current lane and the second cost for a vehicle to perform a lane change using a Graph Search algorithm based on the weighted topological map.

For example, the road traffic information includes at least one of the following: passable distance, traffic congestion level, road class, road speed limit, and road length. The road traffic information may be obtained through real-time vehicle perception, and/or obtained through road map data. For example, vehicle sensors may detect road speed limit signs, road class signs, road length indicators, and other information in real time to acquire parameters including road class, road speed limit, and road length; while passable distance, traffic congestion level, and the like may be obtained through road map data. The foregoing is merely illustrative, and the present application is not limited thereto.

Specifically, the longer the passable distance, the lower the first cost for the vehicle to maintain its current lane, and vice versa; the longer the passable distance, the higher the second cost for the vehicle to perform a lane change, and vice versa; the higher the road congestion level, the higher the first cost for the vehicle to maintain its current lane, and vice versa; the higher the road congestion level, the lower the second cost for the vehicle to perform a lane change, and vice versa; the higher the road class, the lower the first cost for the vehicle to maintain its current lane, and vice versa; the higher the road class, the higher the second cost for the vehicle to perform a lane change, and vice versa; the lower the road speed limit, the higher the second cost for the vehicle to perform a lane change, and vice versa; the lower the road speed limit, the smaller the first cost for a vehicle to maintain its current lane, and vice versa; the longer the road length, the lower the first cost for a vehicle to maintain its current lane, and vice versa; the shorter the road length, the higher the second cost for a vehicle to perform a lane change, and vice versa. It should be noted that the aforementioned road traffic information may be associated with at least one of the first and second costs, which is not limited herein.

After assigning weights to the links in the topological map based on the above traffic information, the updated topological map includes, for example, nodes representing lanes and links representing the connection relationships between lanes. Weights are assigned to the links in the topological map based on one or more types of the above road traffic information. For example, weights values (a, b, c, d, e) ranging from 0 to 1 may be assigned to the links in the topological map according to passable distance, traffic congestion level, road class, road speed limit, and road length, respectively. Specifically, passable distance, traffic congestion level, and road class are strongly correlated factors with correspondingly higher weights, while road class, road speed limit, and road length are weakly correlated factors with lower weights.

For example, the weight a corresponding to the passable distance A is set as follows: when A is greater than 5 km, the weight a is assigned a value of 0.5; when A is less than 5 km and greater than 2 km, the weight a is assigned a value of 0.6; and when A is less than 1 km, the weight a is assigned a value of 0.7.

The weight b corresponding to the road congestion level B is set as follows:
when traffic is free-flowing, the weight b is assigned a value of 0.6; when traffic is moving slowly, the weight b is assigned a value of 0.8; and when traffic is congested, the weight b is assigned a value of 0.9 (it should be noted that the above "free-flowing", "moving slowly", and "congested" may correspond, respectively, to green, red, and dark red route markers commonly adopted in existing navigation technologies. That is, such information can be obtained according to existing techniques, and the present application is not limited to any specific acquisition method).

The weight c corresponds to road class C:
when the road class is an expressway, the weight c is assigned a value of 0.6; when the road class is an urban expressway, the weight c is assigned a value of 0.5; and when the road class is ordinary road, the weight c is assigned a value of 0.4.

The weight d corresponds to road speed limit D:
when the road speed limit is 120 km/h, the weight d is assigned a value of 0.6; when the road speed limit is 100 km/h, the weight d is assigned a value of 0.5; and when the road speed limit is 80 km/h, the weight d is assigned a value of 0.4.

The weight e corresponds to road length E:
when the road length is 15 km or more, the weight e is assigned a value of 0.2; when the road length is 10 km or more, the weight e is assigned a value of 0.3; and when the road length is 5 km or more, the weight e is assigned a value of 0.4.

After determining the weight values (a, b, c, d, e) for the above types of road traffic information, they may be directly assigned to the corresponding links in the topological map, or the individual weight values can be summed and then assigned to the corresponding links in the topological map, or the weight values may be multiplied and then assigned to the corresponding links in the topological map. The above are merely examples and are not intended to limit the present application.

Then, Graph Search algorithms are used to determine the first cost for the vehicle to maintain its current lane and the second cost for the vehicle to perform a lane change. The Graph Search algorithms include, but are not limited to, A* algorithm and Dijkstra's algorithm.

The lane-level navigation method provided by the present application can be implemented as a navigation solution for Urban NOA (Navigate on Autopilot) based on SD maps, and can be applied in NOA system of autonomous vehicles. The lane-level navigation method includes the following steps:
1. After a user sets a navigation destination, the system calculates N routes based on road-level information of the SD Map (including, but not limited to, road topology, road class, road speed limit, road length, and traffic congestion level, etc.) and recommends them on a human-machine interface screen for user selection.
2. After the user selects a specific route, the system generates navigation lane change decision-making within and beyond the perception range (e.g., within and beyond the sight distance) based on lane-level information of the SD Map (including, but not limited to, the number of lanes, lane adjacency relationships, and lane turning information, etc.) in combination with real-time perception information (such as lane markings, curbs, other traffic participants, traffic lights, and ground road markings, etc.).

The above navigation solution in the present application includes two parts: Global Route Planning at the road level and Local Lane Change Decision-Making at the lane level. According to the method of the present application, lane change decision-making is implemented relying solely on the SD Map, which allows the system to travel robustly along the selected navigation route under complex traffic conditions, such as urban areas, expressways, and urban express roads, and prevent missing intersections, ramp entrances/exits, etc., resulting from improper lane selection.

Global Route Planning: After a starting point and a destination are given, the system retrieves the nearby road network from the SD Map, where the road network is composed of nodes and connections between nodes. The system constructs a directed graph from the road network, assigns a weighted cost to each link according to road class, road speed limit, road length, and traffic congestion level, etc., provided by the SD Map, and then solves for a travel route with the minimum cost using the A* search algorithm.

Local Lane Change Decision-Making: The primary difference between a HD map(or an Enhanced SD map) and a SD map lies in that the former can provide precise datapoints or coordinates for lanes, as well as the Lane-to-Lane (L2L) topology which does not include such information. The L2L topology constitutes essential information for lane-level navigation. The present application innovatively proposes a method for robustly inferring the L2L topology to compensate for insufficient raw information inherent to the SD map.

After obtaining the number of lanes ahead of the host vehicle from the SD Map, the L2L topology is inferred according to preset rules. The preset rules may be implemented as a mapping algorithm, whose inputs are the number of lanes N₁ and N₂ for two lane segments, as well as the traffic direction of each lane, and whose outputs are the topological connection relationships between two lane segments.

When N₁= N₂, the lane connection manner is "one-to-one" direct connection. Taking N₁= N₂= 3 and N₁= N₂= 4 as examples, the corresponding topological connection relationships are shown in FIG. 2a and FIG.2b respectively.

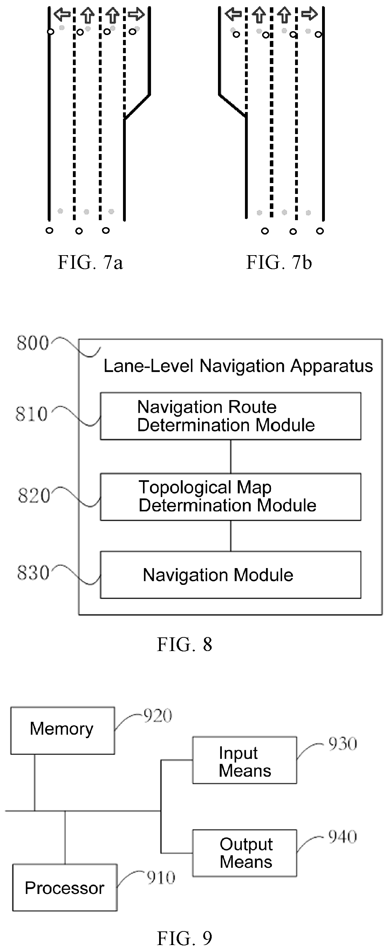

When N₁+ 1 = N₂, the actual road has two possible situations, namely a right-side growth road and a left-side growth road. By abstracting lanes as points (represented as circles in the figures) and taking N₁= 3 and N₂= 4 as an example, the scenarios can be visualized as shown in FIG. 7a and FIG.7b. FIG. 7a shows a schematic diagram of a right-side growth road, and FIG. 7b shows a schematic diagram of a left-side growth road.

Two connection manners are adopted by the algorithm: a left-side lane alignment manner and a right-side lane alignment manner. The left-side lane alignment manner refers to "left 1 to left 1," "left 2 to left 2," "left 3 to left 3," and "left 3 to left 4." The right-side lane alignment manner follows an analogous principle, as shown in FIG. 3a and FIG. 4a.

However, the foregoing algorithm cannot determine which actual road condition is present. In cases of incorrect estimation, the resulting topological connection schematic diagrams are shown in FIG.3b and FIG. 4b.

In case of erroneously inferred topological relationships, the host vehicle may fail to perform a lane change in a timely manner or perform unnecessary lane changes. To address this challenge, the present application proposes a multi-hypothesis topology approach, which does not rely on a single topological connection relationship but instead superimposes a plurality of possible topological configurations simultaneously, with the combined effect illustrated in FIG. 5a and FIG. 5b.

The multi-hypothesis topology contains connection probability, each of which represents in how many scenarios that a connection between a specific pair of lanes occurs. In the above example, the connection "Left 1 to Left 1" occurs in both scenarios, so the connection probability is 100%; while the connection "Left 1 to Left 2" occurs in only one scenario, so the connection probability is 50%. The "multi- hypothesis topology" approach ensures that real topological connections always have a non-zero connection probability. Furthermore, as the host vehicle gradually approaches the transition point at which the number of lanes changes, the topological connection relationships will converge to the correct connection configuration based on observations acquired within line-of-sight range. However, introducing hypothetical non-existent topological connections may lead to situations where the host vehicle should initiate a lane change beyond line-of-sight navigation but fails to do so. When the host vehicle can observe the actual road conditions ahead (i.e., upon entering the line-of-sight range), the multi-hypothesis topological connections can be collapsed into a single-hypothesis topological connection based on the detected lane markings. At this stage, the system can accurately identify whether any lane change was missed during the beyond-line-of-sight navigation phase, and if so, it will immediately initiate a lane change to the target lane, thereby preventing the host vehicle from entering a lane with an incorrect travel direction.

After inferring the topological connection relationships, the present application can abstract the road network into a directed graph. The nodes of the graph represent abstracted lane points (such as the circles in the figure), and the links of the graph represent topological connection relationships. Each link is assigned a weighted cost based on the passable distance, road class, road speed limit, road length, and traffic congestion level and other parameters retrieved from the SD Map to calculate the total cost. A Graph Search algorithm is then used to calculate the optimal lane-change timing, so as to initiate a navigation-guided lane change. The foregoing total cost integrates plurality of weighted cost components, the longer the passable distance, the lower the total cost; the higher the road class and the lower the congestion level, the lower the total cost. For example, if the host vehicle needs to turn right at an upcoming intersection from the rightmost lane while it is currently positioned in the second lane from the right, requiring a single rightward lane change at an appropriate position. When the vehicle is far from the intersection, the passable distance is large and the cost for maintaining its current lane is relatively low, and the system will not initiate an urgent lane change. As the vehicle gradually approaches the intersection, the passable distance decreases and the cost for maintaining the current lane increases and exceeds the cost for changing to the right lane, at which point the system initiates a rightward lane change.

The present application divides the entire navigation route into two parts based on observations: within line of sight and beyond line of sight. For lanes within line of sight, a single-hypothesis topological connection is established based on observed lane lines. For lanes beyond line of sight, a multi-hypothesis topological connection is established. After supplementing the missing lane topology in the SD Map, the optimal lane-change timing is calculated using a Graph Search algorithm.

FIG. 8 is a schematic block diagram illustrating an embodiment of the lane-level navigation apparatus of the present application. In this embodiment, the lane-level navigation apparatus 800 may include:
a navigation route determination module 810, configured for determining a road-level navigation route from a current position of a vehicle to a destination according to road-level information of an SD Map, the road-level navigation route includes a plurality of road segments;
a topological map determination module 820, configured for determining an L2L topological map of the plurality of road segments based on the lane-level information of the SD Map. For example, determining the L2L topological map of the plurality of road segments based on the lane-level information of the SD map includes: determining the L2L topological map of the plurality of road segments based on the lane-level information of each road segment. For example, the L2L topological map includes, but is not limited to, lane-level topological relationships such as: left-right adjacency relationships, predecessor-successor relationships, fork and merge relationships, and lane connection relationships before and after intersections. Lane-level topology is an essential element of a High Definition (HD) map. Autonomous vehicles rely on lane-level road topology to perform maneuvers such as lane changing, merging/diverging, traversing intersections, and entering/exiting ramps. For example, an L2L topological relationship of a first road segment and a second road segment is determined based on the lane-level information of adjacent first and second road segments. The L2L topological relationship includes, but is not limited to, left-right adjacency relationship and predecessor-successor relationship. Determining the L2L topological relationship of adjacent first and second road segments based on the lane-level information includes: determining the left-right adjacency relationships between lanes of the first road segment based on its lane-level information; determining the left-right adjacency relationship between lanes of the second road segment based on its lane-level information; and determining the predecessor-successor relationship between lanes of the first and second road segments based on the left-right adjacency relationships between lanes of the first road segment and the left-right adjacency relationships between lanes of the second road segment, in accordance with a preset alignment manner (including a left-side lane alignment manner and/or a right-side lane alignment manner);
a navigation module 830, configured for performing navigation based at least on the topological map.

For example, lane-level navigation for the vehicle can be realized based on the generated L2L topological map. After obtaining the L2L topological map, the lane-level navigation route from a current position of a vehicle to a destination can be determined, thereby enabling lane-level navigation. For example, a route from the vehicle's current position to the destination is determined to include a plurality of road segments, and then a lane-level navigation route from the vehicle's current position to the destination is determined according to the L2L topological map. For example, if it is determined that the route from the vehicle's current position to the destination includes one left turn and one right turn, a lane-level path is planned for traveling into the left-turn lane (e.g., the leftmost lane) prior to the left turn according to the topological map between the plurality of road segments (including the left-right adjacency relationships and predecessor-successor relationships between lanes). Further, a lane-level path is planned for traveling into the right-turn lane (e.g., the rightmost lane) prior to the right turn. The lane-level navigation route from the vehicle's current position to the destination is generated based on the lane-level paths for each segment determined as described above.

In this embodiment, first, a road-level navigation route from the vehicle's current position to the destination is determined according to the road-level information of the SD Map by the navigation route determination module 810; then, the L2L topological map of the plurality of road segments is determined according to the lane-level information of the SD map by the topological map determination module 820; finally, lane-level navigation is implemented based on the topological map. The above process for implementing lane-level navigation does not rely on a HD map or an Enhanced SD Map, thereby reducing the cost for lane-level navigation and improving its stability.

In some embodiments, the plurality of road segments includes adjacent first and second road segments. Determining the L2L topological map of the plurality of road segments based on the lane-level information of the SD Map includes: connecting lanes of the first road segment and the second road segment according to a preset alignment manner to form a L2L topological relationship of the first and second road segments.

In some embodiments, connecting the lanes of the first road segment and the second road segment according to the preset alignment manner to form the L2L topological relationship of the first and second road segments includes: connecting the lanes of the first and second road segments according to a left-side lane alignment manner and/or a right-side lane alignment manner to form the L2L topological relationship of the first and second road segments.

In some embodiments, the topological map determination module is further configured for connecting the lanes of the first road segment and the second road segment in one-to-one manner to form the L2L topological relationship of the first road segment and the second road segment, when the first road segment and the second road segment have the same number of lanes.

In some embodiments, the topological map determination module is further configured for determining a local L2L topological relationship within the vehicle's perception range based on vehicle perception information. The performing navigation based at least on the topological map includes: performing navigation based on the local L2L topological relationship and the topological map.

In some embodiments, performing navigation based on the local L2L topological relationship and the topological map includes: updating the topological map based on the local L2L topological relationship; and performing navigation based on the updated topological map.

In some embodiments, performing navigation based on the updated topological map includes: determining, based on road traffic information, whether a lane-change timing is met. When the lane-change timing is met, controlling the vehicle to perform a lane change based on the updated topological map. The road traffic information includes at least one of the following: passable distance, traffic congestion level, road class, road speed limit, and road length. The lane-change timing refers to the conditions for changing lanes. The vehicle is controlled to perform a lane change when the conditions are met, and to maintain its current lane when they are not.

In some embodiments, determining whether the lane-change timing is met based on road traffic information includes:
determining a first cost for the vehicle to maintain its current lane based on the road traffic information; and/or determining a second cost for the vehicle to perform a lane change based on the road traffic information;
determining, based on the first cost and/or the second cost, whether the lane-change timing is met.

For example, when the road class is a preset class and the passable distance is less than a preset distance (e.g., the road class is an expressway and the preset distance is 2 km; or the road class is an urban expressway and the preset distance is 1 km), it is determined that the lane-change timing is met, and the vehicle is controlled to perform a lane change.

For example, when the road class is a preset level, the passable distance is less than a preset distance, and the road ahead is relatively congested (e.g., the road class is an expressway and the preset distance is 3 km; or the road class is an urban expressway, and the preset distance is 1.5 km), it is determined that the lane-change timing is met, and the vehicle is controlled to perform a lane change. In this embodiment, under the same road class, the preset distance for triggering lane change control is increased based on road congestion conditions, so as to ensure sufficient distance to complete the lane change. It should be noted that the above methods for determining lane change control are merely examples, which is not limited herein.

In some embodiments, determining whether the lane-change timing is met based on the first cost and/or the second cost includes:
comparing the first cost and the second cost, and determining that the lane-change timing is met when the first cost is greater than the second cost; or, comparing the first cost with a first threshold and/or comparing the second cost with a second threshold, and determining that the lane-change timing is met when the first cost is greater than the first threshold and/or the second cost is less than the second threshold.

In some embodiments, the updated topological map includes nodes representing lanes and links representing the connections between lanes. Determining the first cost for a vehicle to maintain its current lane based on road traffic information and determining the second cost for a vehicle to perform a lane change based on road traffic information includes:
assigning weights to the links in the updated topological map based on road traffic information;
determining the first cost for the vehicle to maintain its current lane and the second cost for the vehicle to perform a lane change by using a Graph Search algorithm based on the weighted topological map.

In some embodiments, the road traffic information includes at least one of the following: passable distance, traffic congestion level, road class, road speed limit, and road length. The road traffic information may be obtained through real-time vehicle perception and/or through road map data. For example, vehicle sensors may detect road speed limit signs, road class signs, road length indicators, and other information in real time to acquire parameters including road class, road speed limit, and road length; while passable distance, traffic congestion level, and the like may be obtained through road map data. The foregoing is merely illustrative, and the present application is not limited thereto.

The lane-level navigation apparatus in the above embodiments may be configured to implement the lane-level navigation method according to any embodiment of the present application and achieve the corresponding effects, and thus further description is omitted herein.

With regard to the above method embodiments, for the sake of simplicity, they have been described as a combination of a series of steps. However, those skilled in the art should understand that the present application is not limited to the described sequence of steps. This is because certain steps in the present application may be performed in a different order or simultaneously. Furthermore, those skilled in the art should also be aware that the embodiments described in the specification are preferred embodiments, and the steps and modules involved are not necessarily essential to the present application. In the above embodiments, the description of each embodiment has its own focus, and for portions not detailed in a particular embodiment, reference may be made to the related descriptions in other embodiments.

In some embodiments, the present application provides a computer device including a memory, a processor, and a computer program stored in the memory, wherein the processor executes the computer program to perform the steps of any one of the lane-level navigation methods described above in the present application.

In some embodiments, the present invention provides a computer-readable storage medium on which computer programs or instructions are stored; when executed by a processor, the computer programs or instructions perform the steps of any one of the lane-level navigation methods described above.

In some embodiments, the present invention provides a computer program product including computer programs or instructions, when executed by a processor, implement the steps of any one of the lane-level navigation methods described above.

The computer device, computer-readable storage medium, and computer program product of the embodiments of the present application described above may be configured to implement the lane-level navigation method of the embodiments of the present application and, accordingly, achieve the technical effects of the embodiments of the present application in implementing the lane-level navigation method, as described above, which will not be repeated herein. In the embodiments of the present application, the relevant functional modules may be implemented via a hardware processor.

FIG. 9 is a schematic diagram of the hardware structure of a computer device for performing a lane-level navigation method provided in another embodiment of the present application. As shown in FIG. 9, the device includes:
one or more processors 910 and a memory 920, in which one processor 910 is taken as an example in FIG. 9.

The device for performing the lane-level navigation method may further include an input means 930 and an output means 940.

Processor 910, memory 920, input means 930, and output means 940 may be connected via a bus or in other ways, while the connection via a bus is taken as an example in FIG. 9.

Memory 920, as a non-volatile computer-readable storage medium, may be used to store non-volatile software programs, non-volatile computer-executable programs, and modules, such as the program instructions/modules corresponding to the lane-level navigation method in the embodiments of this application. Processor 910 executes various functional applications and data processing of the server by running the non-volatile software programs, instructions, and modules stored in memory 920, thereby implementing the lane-level navigation method of the above method embodiments.

The memory 920 may include a program storage area and a data storage area. The program storage area may store an operating system and application programs required for at least one function. The data storage area may store data generated through the use of the lane-level navigation device, etc. Furthermore, the memory 920 may include a high-speed random access memory (RAM) and may also include a non-volatile memory, such as at least one disk storage device, flash memory device, or other non-volatile solid-state storage device. In some embodiments, the memory 920 may optionally include memory located remotely relative to processor 910, and such remote memory may be connected to the lane-level navigation device via a network. Examples of such networks include, but are not limited to, the Internet, an intranet, a local area networks (LAN), a mobile communication network, and combinations thereof.

Input means 930 may receive inputted numerical or character information and generate signals related to user settings and function control of the lane-level navigation device. Output means 940 may include display devices such as a display screen. One or more modules are stored in memory 920, and when being executed by one or more processors 910, they implement the lane-level navigation method described in any of the above method embodiments.

The above products can execute the methods provided in the embodiments of the present application, with functional modules and beneficial effects corresponding to the methods. Technical details not described in detail in this embodiment may be referred to in the methods provided in the embodiments of the present application.

The computer devices of the embodiments of the present application may exist in various forms, including but not limited to vehicle-mounted computer devices, mobile communication devices, ultra-mobile personal computer devices, servers, and other electronic apparatuses with data interaction functions.

In some embodiments, the present application further provides a mobile platform on which a computer device of any embodiment of the present application is installed. The mobile platform includes, but is not limited to, vehicles, tracked robots, bipedal robots, quadrupedal robots, and the like. Th vehicles may include passenger cars, pickup trucks, and freight trucks. The foregoing are merely examples, and the present application does not limit the specific form of the mobile platform.

The device embodiments described above are merely illustrative. The units illustrated as separated components may or may not be physically separated. The components shown as units may or may not be physical units, and may be located either in one place or may be distributed across a plurality of network units. Some or all of the modules may be selected as necessary to realize the purpose of embodiments of the present application.

Through the description of the above embodiments, those skilled in the art can clearly understand that each embodiment can be implemented by means of software in conjunction with a general hardware platform, or by means of hardware alone. Finally, it should be noted that the above embodiments are only used to illustrate the technical solutions of the present application and are not a limitation thereof. Notwithstanding the present application has been described in detail with reference to the foregoing embodiments, it should be understood by a person of ordinary skill in the art that it is still possible to modify the technical solutions described in the foregoing embodiments or make equivalent substitutions for some of the technical features therein. These modifications or substitutions do not make the essence of the corresponding technical solutions depart from the spirit and scope of the technical solutions of the embodiments of the present application.

## Claims

1. A lane-level navigation method comprising:
determining a road-level navigation route from a current position of a vehicle to a destination according to road-level information of a Standard Definition (SD) map, the road-level navigation route comprising a plurality of road segments;
determining a Lane-to-Lane topological map of the plurality of road segments based on lane-level information of the SD Map; and
performing navigation based at least on the topological map.

2. The method according to claim 1, wherein the plurality of road segments comprises adjacent first and second road segments; and wherein determining the Lane-to-Lane topological map of the plurality of road segments based on the lane-level information of the SD Map comprises:
connecting lanes of the first road segment and the second road segment according to a preset alignment manner to form a Lane-to-Lane topological relationship of the first road segment and the second road segment.

3. The method according to claim 2, wherein connecting the lanes of the first road segment and the second road segment according to the preset alignment manner to form the Lane-to-Lane topological relationship of the first road segment and the second road segment comprises:
connecting the lanes of the first road segment and the second road segment according to a left-side lane alignment manner and/or a right-side lane alignment manner to form the Lane-to-Lane topological relationship of the first road segment and the second road segment.

4. The method according to claim 2, further comprising:
connecting the lanes of the first road segment and the second road segment according to one-to-one manner to form the Lane-to-Lane topological relationship of the first road segment and the second road segment, when the first road segment and the second road segment have the same number of lanes.

5. The method according to claim 2, further comprising:
determining a local Lane-to-Lane topological relationship within a perception range of the vehicle based on vehicle perception information;
and wherein performing navigation based at least on the topological map comprises: performing navigation based on the local Lane-to-Lane topological relationship and the topological map.

6. The method according to claim 5, wherein performing navigation based on the local Lane-to-Lane topological relationship and the topological map comprises:
updating the topological map based on the local Lane-to-Lane topological relationship; and
performing navigation based on the updated topological map.

7. The method according to claim 6, wherein performing navigation based on the updated topological map comprises:
determining whether a lane-change timing is met based on road traffic information; and
when the lane-change timing is met, controlling the vehicle to perform a lane change based on the updated topological map.

8. The method according to claim 7, wherein determining whether the lane-change timing is met based on road traffic information comprises:
determining a first cost for the vehicle to maintain its current lane based on road traffic information; and/or determining a second cost for the vehicle to perform a lane change based on road traffic information; and
determining whether the lane-change timing is met according to the first cost and/or the second cost.

9. The method according to claim 8, wherein determining whether the lane-change timing is met according to the first cost and/or the second cost comprises:
comparing the first cost and the second cost, and determining that the lane-change timing is met when the first cost is greater than the second cost; or
comparing the first cost with a first threshold and/or comparing the second cost with a second threshold, and determining that the lane-change timing is met when the first cost is greater than the first threshold and/or the second cost is less than the second threshold.

10. The method according to claim 8, wherein the updated topological map comprises nodes representing lanes and links representing connection relationships between lanes; and wherein determining the first cost for the vehicle to maintain its current lane based on road traffic information, and determining the second cost for the vehicle to perform a lane change based on road traffic information comprise:
assigning weights to the links in the updated topological map according to the road traffic information; and
determining the first cost for the vehicle to maintain its current lane and the second cost for the vehicle to perform a lane change by using a Graph Search algorithm based on the weighted topological map.

11. The method according to any one of claims 7-10, wherein the road traffic information comprises at least one of the following: passable distance, traffic congestion level, road class, road speed limit, and road length.

12. A lane-level navigation apparatus, comprising:
a navigation route determination module configured for determining a road-level navigation route from a current position of a vehicle to a destination according to road-level information of a Standard Definition (SD) map, the road-level navigation route comprising a plurality of road segments;
a topological map determination module configured for determining a Lane-to-Lane topological map of the plurality of road segments based on the lane-level information of the SD Map; and
a navigation module configured for performing navigation based at least on the topological map.

13. The apparatus according to claim 12, wherein the plurality of road segments comprises adjacent first and second road segments; and wherein determining the Lane-Lane topological map of the plurality of road segments based on the lane-level information of the SD Map comprises:
connecting lanes of the first road segment and the second road segment according to a preset alignment manner to form a Lane-to-Lane topological relationship of the first road segment and the second road segment.

14. The apparatus according to claim 13, wherein connecting the lanes of the first road segment and the second road segment according to the preset alignment manner to form the Lane-to-Lane topological relationship of the first road segment and the second road segment comprises:
connecting the lanes of the first road segment and the second road segment according to a left-side lane alignment manner and/or a right-side lane alignment manner to form the Lane-to-Lane topological relationship of the first road segment and the second road segment.

15. The apparatus according to claim 13, wherein the topological map determination module is further configured for: connecting the lanes of the first road segment and the second road segment according to one-to-one manner to form the Lane-to-Lane topological relationship of the first road segment and the second road segment, when the first road segment and the second road segment have the same number of lanes.

16. The apparatus according to claim 13, wherein the topological map determination module is further configured for determining a local Lane-to-Lane topological relationship within a perception range of the vehicle based on vehicle perception information; and wherein performing navigation based at least on the topological map comprises performing navigation based on the local Lane-to-Lane topological relationship and the topological map.

17. A computer device, comprising a memory, a processor, and a computer program stored in the memory, wherein the processor executes the computer program to implement the steps of the method according to any one of claims 1-11.

18. A computer-readable storage medium having computer programs or instructions stored thereon, wherein the computer programs or instructions, when executed by a processor, implement the steps of the method according to any one of claims 1-11.

19. A computer program product comprising computer programs or instructions, wherein the computer programs or instructions, when executed by a processor, implement the steps of the method according to any one of claims 1-11.

20. A mobile platform on which a computer device according to claim 17 is installed.
